**Europäisches Patentamt**

**European Patent Office**

**Office européen des brevets**

(19)

(11) Numéro de publication : **0 076 884**
**B1**

(12) **FASCICULE DE BREVET EUROPÉEN**

(45) Date de publication du fascicule du brevet :
26.03.86

(51) Int. Cl.⁴ : **F 24 J   3/00**

(21) Numéro de dépôt : **81401575.6**

(22) Date de dépôt : **14.10.81**

(54) Dispositif échangeur-stockeur de calories ou frigories par chaleur latente de fusion.

(43) Date de publication de la demande :
**20.04.83 Bulletin 83/16**

(45) Mention de la délivrance du brevet :
**26.03.86 Bulletin 86/13**

(84) Etats contractants désignés :
**AT BE CH DE GB IT LI LU NL SE**

(56) Documents cités :
**DE-A- 3 033 014**
**FR-A-   989 715**
**FR-A- 1 050 933**
**US-A- 4 127 161**
**US-A- 4 205 656**

(73) Titulaire : **Patry, Jean**
**9, rue Saint-Paul**
**F-75004 Paris (FR)**

**Lenotre, Christian**
**Quartier de l'Ubac Pré du Lac**
**F-06740 Châteauneuf de Grasse (FR)**

(72) Inventeur : **Patry, Jean**
**9, rue Saint-Paul**
**F-75004 Paris (FR)**

(74) Mandataire : **Armengaud, Alain**
**Cabinet ARMENGAUD AINE 3 Avenue Bugeaud**
**F-75116 Paris (FR)**

### Description

La présente invention est relative à un dispositif échangeur-stockeur de calories et/ou de frigories par chaleur latente de fusion. Un tel dispositif est plus particulièrement destiné aux installations nécessitant la mise en place d'une production des calories ou des frigories en quantités variables dans une période donnée, ces installations permettant de réduire dans des proportions très importantes la puissance des appareils destinés à produire les calories et/ou les frigories.

On pourra, à cet égard, se référer au FR-A-2 469 678 qui vise une telle installation. Ces installations nécessitent des moyens de stockage des calories et/ou des frigories produites, celles-ci étant redistribuées en fonction des besoins, la capacité de stockage étant choisie de façon que l'installation fournisse, d'une manière instantanée, la puissance instantanée maximale exigée par les charges de l'installation.

On connaît (US-A-4 205 656) un dispositif échangeur-stockeur de calories qui comprend une enceinte de forme parallélépipédique dans laquelle sont empilés des conteneurs élémentaires de forme sphérique remplis d'un agent de stockage de calories et/ou de frigories.

L'invention se propose d'apporter un dispositif échangeur-stockeur de calories ou de frigories du type ci-dessus, et qui apporte en outre une solution aux problèmes suivants :

a) possibilité pour les conteneurs élémentaires d'absorber les variations de volume résultant des changements d'état (cristallisation-fusion) ;

b) possibilité de réaliser un empilage homogène, afin que le caloporteur rencontre une résistance homogène lors de sa circulation, en vue d'éviter des zones non drainées lors de la charge ou de la décharge ;

c) obtention d'un rapport surface extérieure d'échange/volume répondant aux exigences de l'échange, environ 1 m$^2$ de surface d'échange pour 10 litres ;

d) possibilité de mesurer l'état de charge de l'échangeur-stockeur en mesurant la pression résiduelle du réseau du caloporteur.

Ces buts sont atteints par un échangeur-stockeur de calories ou de frigories par chaleur latente de fusion qui comprend un conteneur dans lequel sont empilés des conteneurs élémentaires, de forme sphérique, remplis d'un agent de stockage des frigories et/ou des calories présentant une forte chaleur de fusion, une poche d'air étant maintenue dans lesdits conteneurs élémentaires, caractérisé en ce que ledit conteneur principal est de forme cylindrique pour améliorer l'auto-empilage des conteneurs sphériques, en ce que chaque conteneur élémentaire est constitué par l'assemblage de deux demi-sphères laissant entre elles un intervalle pour la circulation du caloporteur, et est réalisé en un matériau déformable permettant d'absorber les variations de volume résultant de la cristallisation.

Selon une caractéristique de cette invention, le conteneur cylindrique comporte, à chacune de ses extrémités, une plaque pourvue d'ouvertures, notamment de trous ou de fentes, destinés à transformer la pression statique du caloporteur en une pression dynamique à son entrée dans ladite capacité, ceci afin d'assurer une répartition homogène dudit caloporteur dans tout l'échangeur.

D'autres caractéristiques et avantages de cette invention ressortiront de la description faite ci-après en référence aux dessins annexés, qui en illustrent divers exemples de réalisation non limitatifs. Sur les dessins :

la Figure 1  est une vue schématique, en élévation, d'un échangeur-stockeur selon l'invention ;

la Figure 2  est une vue en bout, à plus grande échelle, avec arrachement partiel, d'un échangeur-stockeur selon la Figure 1 ;

la Figure 3  illustre une variante d'un détail de la Figure 2 ; et,

la Figure 4  illustre un conteneur élémentaire.

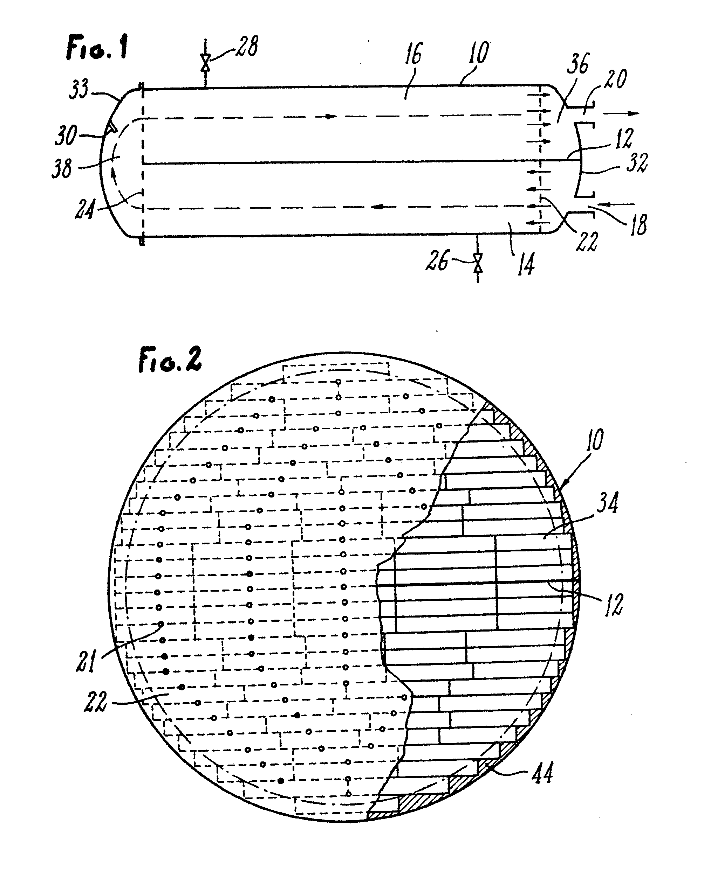

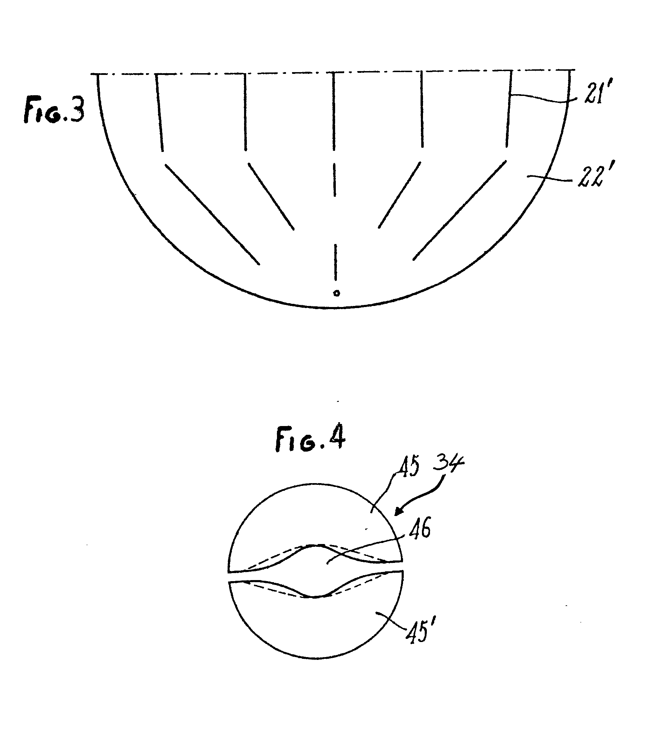

En se référant aux dessins, et notamment aux Figures 1 et 2, on voit que le dispositif stockeur-échangeur selon l'invention comprend un conteneur 10, de préférence cylindrique afin de mieux résister aux pressions de service. La partie interne de ce conteneur 10 est divisée en deux enceintes 14-16 par l'intermédiaire d'une cloison de séparation longitudinale 12. A ses deux extrémités, le conteneur comporte des boîtes à eau 36-38, constituées par des fonds bombés 32 et 33. Le fond bombé 33 est démontable, afin de permettre l'accès à l'intérieur de la virole cylindrique constituant le conteneur 10. Le second fond bombé 32 est pourvu des tuyauteries d'admission 18 et de sortie 20 du caloporteur. Ainsi qu'on peut le voir sur la Figure 1, la tuyauterie d'admission 18 débouche dans l'enceinte 14, et la tuyauterie d'évacuation 20 débouche dans l'enceinte 16. Grâce à cette disposition, le caloporteur circule à contre-courant dans les enceintes 14 et 16 du conteneur 10, comme représenté par le trajet en traits interrompus.

A chacune des extrémités de la virole du conteneur 10, on prévoit des plaques circulaires 22, 24 percées d'ouvertures. Ces plaques servent, d'une part à retenir dans le conteneur les empilages de conteneurs élémentaires 34 décrits plus loin, et d'autre part à présenter, vis-à-vis du caloporteur admis dans le conteneur 10, une résistance importante par rapport à la résistance propre des autres éléments du circuit emprunté par le caloporteur, afin d'obtenir une répartition homogène du caloporteur dans le conteneur, les ouvertures des plaques transformant la pression statique du caloporteur, dans les boîtes à eau 36-38, en une pression dynamique dans chaque enceinte 14-16. Les ouvertures pratiquées dans les plaques circulaires peuvent être soit des trous 21 (plaque 22, Figure 2), soit des fentes 21' (plaque 22', Figure 3). L'échangeur-stockeur comprend par ailleurs une vidange 26, une purge 28, et une sonde thermométrique 30.

Dans chacune des enceintes 14, 16 du conteneur 10, on réalise, comme représenté à la Figure 2, des empilages de conteneurs élémentaires 34, ce qui crée un échangeur à plaques.

On a représenté, à la Figure 4 un conteneur élémentaire 34. Celui-ci est réalisé en un matériau déformable (par exemple, métal ou polyéthylène) et il est rempli d'un milieu de stockage de l'énergie calorifique ou frigorifique à forte chaleur latente de fusion. On peut utiliser à cet effet des sels hydratés, et notamment un hydrate de soude, ou bien encore de l'eau.

Chaque conteneur élémentaire 34, est constitué de deux demi-sphères 45-45' qui, après assemblage, permettent la circulation du caloporteur à l'extérieur de la sphère obtenue et entre les deux demi-sphères, dans l'intervalle 46.

Cette forme sphérique permet un auto-empilage dans le conteneur principal cylindrique : elle permet également d'obtenir le rapport surface d'échange/volume précisé plus haut. Enfin, la section axiale de la sphère est préformée de façon que :

les flux d'échange ne soient pas trop éloignés du cœur à cristalliser ;

les variations de volume dues à la cristallisation soient absorbées par cette section, sans déformation extérieure de la sphère (partie en traits interrompus, à la Figure 4).

De préférence, la capacité des conteneurs élémentaires est faible, par exemple de l'ordre de 2 litres, ceci afin de réduire les conséquences néfastes d'une fuite.

Selon l'invention, on interpose, entre les empilages de conteneurs élémentaires 34, dans le conteneur 10, et la virole de ce dernier un garnissage 44 de mousse de matière plastique, par exemple de polyéther à très haut pouvoir de compressibilité, afin de réaliser un calage des conteneurs 34.

Le dispositif décrit ci-dessus constitue un échangeur-stockeur à plaques présentant un excellent coefficient de remplissage (supérieur à 75 %), dont le primaire est constitué par le caloporteur circulant dans les enceintes 14-16, ce caloporteur, qui peut être de l'eau, étant utilisé soit pour la charge de l'échangeur-stockeur, soit pour sa décharge, suivant le sens des écarts de température. En effet, ce caloporteur présente un écart de température vis-à-vis des températures de cristallisation du milieu contenu dans les conteneurs élémentaires 34, et, suivant que cet écart est positif ou négatif, l'échangeur-stockeur se charge (cristallisation) ou se décharge (fusion). Cet échangeur permet d'obtenir une importante surface d'échange par rapport au volume du milieu de stockage des conteneurs élémentaires ; en effet, cette surface est de l'ordre de 1 m² pour 10 à 15 litres de produit de stockage.

Cet échangeur-stockeur peut présenter une puissance de décharge beaucoup plus importante que la puissance de charge, le rapport R de la puissance de décharge par rapport à la puissance de charge étant défini par la formule :

$$R = \frac{P_D}{P_C} = \frac{\Delta t\, D(es)}{\Delta t\, C(es)} \times \frac{\log \dfrac{teC - T}{tsC - T}}{\log \dfrac{teD - T}{tsD - T}}$$

dans laquelle :

$P_D$ est la puissance de décharge ;

$P_C$ est la puissance de charge ;

$\Delta t D(es)$ est l'écart de température (entrée, sortie) lors de la décharge ;

$\Delta t C(es)$ est l'écart de température (entrée, sortie) lors de la charge ;

teC est la température à l'entrée lors de la charge ;

tsC est la température à la sortie lors de la charge ;

teD est la température à l'entrée lors de la décharge ;

tsD est la température à la sortie lors de la décharge ; et,

T est la température de stockage.

On a indiqué plus haut que les conteneurs élémentaires étaient réalisés en un matériau déformable : on sait en effet que, lors d'un changement d'état (cristallisation - fusion), il se produit généralement une variation de densité, donc une variation de volume ; ces variations sont donc absorbées par l'enveloppe déformable des conteneurs 34. Dans le cas particulier de l'eau, qui présente une augmentation de volume de l'ordre de 9 % lors de la cristallisation, le problème lié à cette augmentation est résolu en maintenant dans les conteneurs élémentaires une poche d'air qui produit une expansion propre à l'échangeur-stockeur. Ceci permet de ramener l'expansion nécessaire au circuit du caloporteur à des dimensions raisonnables. Par ailleurs, on peut contrôler l'état de charge de l'échangeur-stockeur (l'état du stock) en mesurant la pression résiduelle de réseau du caloporteur. En outre, le contrôle de la pression du caloporteur permet de contrôler le fluage de la glace, dans le cas de l'eau, ce qui maintient à une valeur constante les espaces libres entre conteneurs élémentaires 34.

**Revendications**

1. Dispositif échangeur-stockeur de calories ou de frigories par chaleur latente de fusion, qui comprend un conteneur (10) dans lequel sont empilés des conteneurs élémentaires (34), de forme sphérique, remplis d'un agent de stockage des frigories et/ou des calories présentant une forte chaleur de fusion, une poche d'air étant maintenue dans lesdits conteneurs élémentaires, caractérisé en ce que ledit conteneur principal (10) est de forme cylindrique pour améliorer l'auto-empilage des conteneurs sphériques, en ce que chaque conteneur élémentaire est constitué par l'assemblage de deux demi-sphères (45-45')
laissant entre elles un intervalle (46) pour la
circulation du caloporteur, et est réalisé en un
matériau déformable, permettant d'absorber les
variations de volume résultant de la cristallisation.

2. Dispositif échangeur-stockeur selon la
revendication 1, caractérisé en ce que l'on choisit la forme des conteneurs élémentaires de façon
à obtenir un rapport surface extérieure
d'échange/volume de l'ordre de 1 m² de surface
d'échange pour 10 litres.

3. Dispositif selon l'une des revendications 1
ou 2, caractérisé en ce que ledit conteneur (10)
comporte, à chacune de ses extrémités, une
plaque (22-24) pourvue d'ouvertures pour transformer, comme connu, la pression statique du
caloporteur en une pression dynamique à son
entrée dans ladite capacité (14 ou 16), permettant
ainsi d'obtenir une répartition homogène du caloporteur dans tout l'échangeur.

4. Echangeur selon l'une quelconque des
revendications précédentes, caractérisé en ce
que les conteneurs élémentaires sont réalisés en
un matériau déformable tel que le polyéthylène, le
polypropylène, ou métal ou autre.

5. Echangeur selon l'une quelconque des
revendications précédentes, caractérisé en ce
que le contrôle de l'état du stockage des frigories
ou des calories s'effectue par la mesure de la
pression résiduelle du caloporteur dans le conteneur (10), le changement d'état du milieu de
stockage renfermé dans les conteneurs élémentaires provoquant une augmentation de leur
volume, entraînant à son tour une augmentation
du volume du caloporteur.

**Claims**

1. Heat or cold exchanger and storage device
operable according to the melting latent-heat
effect, which comprises a container (10) in which
elementary containers (34), having a spherical
shape and filled with a heat and/or cold storage
medium capable of generating a considerable
quantity of heat when melting, are stocked, an air
pocket being maintained in said elementary containers, characterized in that said main container
(10) is cylindrical for improving the self-stocking
of the spherical containers, and in that each
elementary container consists of a pair of assembled semi-spherical elements (45-45') providing a
gap (46) therebetween for permitting the circulation of the heat carrier medium, and is formed of a
deformable material capable of absorbing volumetric variations resulting from crystallisation.

2. Exchanger and storage device according to
Claim 1, characterized in that the shape of said
elementary containers is so selected as to provide
a ratio of the external area to the volume of the
order of 1 m² of exchanger surface for 10 litres.

3. Device according to any of Claims 1 or 2,
characterized in that said container (10) comprises, at each end thereof, a perforated plate (22-24) having apertures adapted to convert the static
pressure of the heat carrier medium into a
dynamic pressure as it penetrates into said chambers (14-16), thus affording a homogeneous distribution of said heat carrier medium throuhout
the exchanger.

4. Exchanger according to any of the preceding Claims, characterized in that said elementary
containers are made of a deformable material
such as polyethylene, polypropylene, metal or
other similar materials.

5. Exchanger according to any of the preceding Claims, characterized in that the state of the
stored cold or heat is controlled by controlling
the residual pressure of said carrier medium in
said container (10), the change of state of the
storage medium contained in said elementary
containers producing an increase of the elementary containers volume, which produces an increase of the carrier medium volume.

**Patentansprüche**

1. Wärme- oder Kältetauscher-Speichervorrichtung, die Schmelz-Latentwärme verwendet,
bestehend aus einem Behälter (10), in dem kugelförmige Teilbehälter (34) in dichter Packung
angeordnet sind, die unter Aufrechterhaltung eines Lufteinschlusses mit einem Kälte- und/oder
Wärmespeichermittel hoher Schmelzwärme gefüllt sind, dadurch gekennzeichnet, daß der
Hauptbehälter (10) zur Verbesserung der selbsttätigen Ausrichtung der kugelförmigen Behälter
eine zylindrische Form aufweist, und daß jeder
Teilbehälter aus zwei miteinander verbundenen,
einen Zwischenraum (46) für den Umlauf des
Wärmeübertragungsmittels freilassenden Halbkugeln (45-45') aus einem verformbaren Material
besteht, das dazu geeignet ist, die durch die
Kristallisation bedingten Volumenschwankungen
aufzunehmen.

2. Wärme- oder Kältetauscher-Speichervorrichtung nach Anspruch 1, dadurch gekennzeichnet, daß die Teilbehälterform so gewählt ist,
daß sich ein Verhältnis Tauscheraußenfläche/Tauschervolumen in der Größenordnung
von 1 qm auf 10 1 ergibt.

3. Vorrichtung nach einem der Ansprüche 1
oder 2, dadurch gekennzeichnet, daß der Behälter (10) endseitig jeweils eine Öffnungen umfassende Platte (22-24) aufweist, um in an sich
bekannter Weise den statischen Druck des
Wärmeübertragungsmittels in einen dynamischen Druck an dessen Einlaß in den entsprechenden Behälterteilraum (14 oder 18) umzuwandeln, wodurch eine homogene Verteilung des
Wärmeübertragungsmittels im gesamten Tauscher erreicht wird.

4. Tauscher nach einem der vorangegangenen
Ansprüche, dadurch gekennzeichnet, daß die
Teilbehälter aus einem verformbaren Material wie
Polyethylen, Polypropylen oder Metall oder dergleichen besteht.

5. Tauscher nach einem der vorangegangenen Ansprüche, dadurch gekennzeichnet, daß die Zustandsüberprüfung des Kälte- oder Wärmespeichermittels über den Restdruck des Wärmeübertragungsmittels im Behälter (10) erfolgt, wobei die Zustandsänderung im Bereich des in den Teilbehältern eingeschlossenen Speichermittels eine Zunahme des Speichermittelvolumens hervorruft, welches wiederum eine Zunahme im Volumen des Wärmeübertragungsmittels nach sich zieht.

**Fig. 1**

**Fig. 2**

Fig.3

Fig.4